# EUROPEAN PATENT APPLICATION

(11) **EP 2 103 897 A1**
(43) Date of publication of application: **23.09.2009**
(21) Application number: 07866351.5
(22) Date of filing: 12.12.2007
(51) Int. Cl.: G01B 3/48

(54) **AUTOMATIC SCREW VERIFIER**

(30) Priority: 14.12.2006 ES 200603169
(71) Applicant: Saiz Gallego, Alfonso, 01013 Vitoria-Alava (ES)
(72) Inventor: Saiz Gallego, Alfonso, 01013 Vitoria-Alava (ES)
(74) Representative: Carvajal y Urquijo, Isabel
(86) International application number: PCT/ES2007/000721
(87) International publication number: WO 2008/071819

(57) **Abstract**

The automatic thread gauge has a bed (1) upon which a division plate is established, which rotates around a central axis (3) and which supports a plurality of jaws (4), arranged in circumferential alignment and equiangular distribution, being said jaws intended to receive the parts to be inspected. Around said division plate (2), on the bed itself, there is established a series of fixed work stations, specifically a diameter gauging station (7), a thread gauging station (8), optionally a second thread gauging station (9) and a part manipulating device (10). The parts, which are conveniently fixed to the jaws (4) move intermittently from station to station, and along them the diameter gauging, thread gauging and separation between valid and invalid or defective parts are performed in a completely automatic way.

## Description

### OBJECT OF THE INVENTION

The present invention refers to a thread gauge, which enables to control the quality of a thread of any measure, guaranteeing the homogeneity of the final manufactured product, with a very high degree of precision and stability and in a completely automatic way.

Specifically, an object of the present invention is to know the verification torque and the rolling angle torque, with the adequate traceability and without uncertainty, attaining at the same time a productivity improvement. The object of the invention is to have a thread gage system with which, based on the established torque control and within a range of tolerance, performed by a go/no-go thread gage device, duly calibrated, and with the control of the rolling angle of this gage device as well, it is obtained from the combination of these two aspects, torque and rolling angle, the quality of the thread.

In a more specific way, the gauge being claimed enables to verify threads in a completely automatic way, controlling both the minimum interior diameter thereof and the necessary torque to make a "go" gauge go through in its entire length, as well as the rolling angle and torque control for the "no-go" gauge inside the thread.

### BACKGROUND OF THE INVENTION

Nowadays, there are known procedures to check diameters and threads to guarantee the quality and homogeneity of the manufactured pieces. Said processes are based on manual verifications, for which go/no-go diameter plugs and conventional go/no-go diameter thread plugs are used.

However, since the gauging is carried out manually, it is subject to the uncertainty of the human factor, taking into account that the necessary effort to make a go/no-go diameter or thread plug go through can be interpreted very differently by different people.

Evidently, it depends on the sensibility of the fingers, wrist, physical constitution, that is to say, a whole set of anthropometric variables, both structural and functional.

The set of controls performed manually by an operator on a threaded hole are detailed below:
- Verification of the interior diameter of the thread, with go plug of an appropriate diameter.
- Verification of the interior diameter of the thread, with no-go plug of an appropriate diameter.
- Verification of the thread, with go gauge of appropriate measure.
- Verification of the thread, with no-go gauge of appropriate measure.

This entails a problem centered mainly on the following aspects:
- Lack of exact knowledge of the tightening torque, since there is no control of the torque used to introduce the go area or the no-go area.
- Lack of exact knowledge of the angle rolled by the gauges, since there is no control of the angle rolled by the gauge, either in the go area or in the no-go area.
- Total lack of traceability since there is no record of the tightening torques, angles, dates and gauging time.
- High uncertainty, as in any manual process, derived from the actual gauge and its wear, and more influentially, from the human factor, since the anthropometric variables defining each person make him/her different from the rest and therefore, the perception of the effort will be different as well.
- Low productivity since, due to the current geometry of conventional thread gauges, the gauging will be a very slow task. Nowadays, manual gauges are independent thread gauges, that is to say, a thread gauge has two heads, a go one and a no-go one, and therefore, while performing the gauging it will be necessary to completely unscrew the go one to be able to introduce the no-go.
- High cost of the process derived from the low productivity.
- High absenteeism due to health problems related to the manual gauging of threads, such as wrist cramps, sprains, etc., as well as a high level personnel rotation since it is a monotonous task.

### DESCRIPTION OF THE INVENTION

The automatic gauge of the invention satisfactorily solves the aforementioned problems, in each and all of the different aspects mentioned.

To that end and in a more concrete way, the gauge being claimed is constituted by a bed on which a series of fixed stations are established, specifically an interior diameter gauging station, a thread gauging station, an automatic unloader and parts manipulating device, to which a series of tools or jaws of the pieces to be checked can be sequentially faced, said jaws being mounted on a division plate with circular motion, but which could be equally mounted with a linear movement and activated by electric, hydraulic, pneumatic or other kind of means.

An operator manually places the parts on the jaws or tools, after which the system detects a first part and the division plate proceeds to the next station.

The pneumatic actuators start to go down thus being performed a first verification with the go diameter gauge and then with the no-go diameter gauge, the actuator reaching the final position so that when said position is detected, the pneumatic actuators start to go up recovering the original position and sending the appropriate information to a microprocessor.

Next, the division plate proceeds to a new station and the second gauge starts the thread gauging through a controlled rotation, also providing appropriate information to the microprocessor after which there is an unscrewing or inverse rotation of the screwdriver and the elevation of the station going again to the initial position.

Next, the division plate reaches again a station so that the jaw faces the part unloader where the pneumatic manipulating device goes down in the "Z" axis, the clamp is closed onto the part, the manipulating device advances on the "X" axis, the clamp opens and releases the part, the manipulating device going up again in the "Z" axis to recover its original position.

The division plate proceeds to another station again and thus the gauge can start the work cycle again.

A magnetic sensor on the outlet ramp detects the parts which are not admitted as valid preventing them from entering the outgoing belt where the valid parts are released.

According to this structure, the following advantages are attained with respect to the classic manual system.
- The automation of the thread control offers an exact value of the tightening torque needed to make both the go gauge and the no-go gauge go through. In this way, all the threads are verified with the same criterion and at the same time.
- The torque control is performed from the first degree rotated by the gauge until the last one; and it is possible to obtain graphics of the evolution thereof along the gauging process, as well as to superpose different graphics, to compare them in a simple way.
- Equally or even more important than this, is to know the angle rotated by the gauge, as well as the torque made. The automation system enables to know exactly the angles rotated at each verification stage or area. Said values will be critical to determine if a thread can be considered correct or defective.
- Thanks to the real time control of the tightening torque and angle used by the system to inspect a thread, as well as other complementary data which result in a total traceability of each part verified.

The system can automatically register the following data:
- Number of verification channel.
- The application used for each verification channel, in case of a multiple and simultaneous verification.
- Verification program used.
- Number of operation.
- Torque and angle result of the verification performed.
- Maximum, minimum torque established.
- Maximum, minimum angle established.
- Verification date dd/mm/yy and time hh:mm:ss.
- Serial number.
- Type of part.
- Verification stage.

Many other data can be added to this, according to the traceability needs required.

The gauge can also enable to make different statistic calculations from the data collected therein, such as:
- Average
- Standard deviation
- Minimum
- Maximum
- Top and bottom tolerances
- 3 Sigma value
- Cp, Cpk...

All the data can be analyzed afterwards, before the decisions have been taken.

The automatic process has much less uncertainty than the manual process, although it is affected by variables of the gauge and the driving system.

Thanks to the development carried out, a continuous go/no-go gauge has been attained, that is to say, in the same axis and keeping the same helix a thread gauge has been developed. In this way, the verification comprises a stage of rotation in the same direction and then a stage of rotation in the opposite direction.

Given the speed characteristics at which the verification can be carried out, the productivity is high, and the process can be completely industrialized.

### DESCRIPTION OF THE DRAWINGS

To complement the present description and to help understand better the characteristics of the invention, according to a preferred example of a practical embodiment thereof, a series of illustrative and non-limiting drawings is attached as part of said description, which represents the following:
Figure 1 shows a general perspective view of an automatic thread gauge created according to the object of the present invention.
Figure 2 shows a perspective amplified detailed view of one of the tools or gripping jaws of the parts with their corresponding rotating disc.
Figure 3 shows an amplified detailed view of an elevated side of the diameter gauging station.
Figure 4 shows a perspective amplified detailed view of the go/no-go thread gauge.
Figure 5 shows a detailed elevated side view of the thread gauging station.
Figure 6 shows a profile of the part manipulating device.

### PREFERRED EMBODIMENT OF THE INVENTION

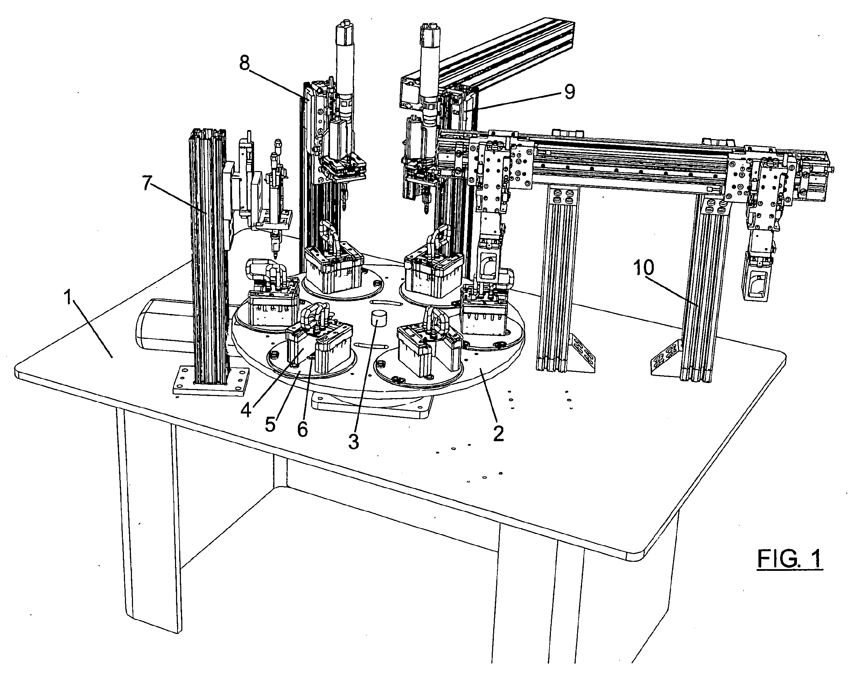

In view of the aforementioned drawings, and particularly figure 1, it can be observed how the gauge being claimed is constituted by a bed (1), on which a division plate (2) is established, conveniently motor-driven to rotate on a central axis (3) destined to support a plurality of jaws (4), arranged in circumferential alignment, and with an equiangular distribution, which will receive the parts to be inspected. Each jaw (4) can also turn around itself, for which purpose the jaws (4) are mounted on the division plate (2) through rotating discs (5), which rotate around the division plate (2) through the central axes (6) existing on each one of them.

In this way, in the rotating and intermittent advance of the division plate (2), each jaw (4), and consequently each part to be inspected, conveniently faces a series of work stations, concretely a diameter gauging station (7), a thread gauging station (9) and a parts manipulating device (10), all of which are mounted on the bed (1), as shown in figure 1.

The objective of the station (7) is to inspect with a go/no-go plug the internal diameter of the threaded hole. The measure of the go and the diameter of the no-go will depend on the measure to be inspected.

The system is based on the transformation of a lineal measure into a diameter measure.

There will be all the necessary independent and identical systems, located in consecutive stations, so that in a same stage all the threaded holes the part may have are inspected.

Said gauge will have to be joined in a non-rigid way, with certain clearance, to the end of the rod of the measuring element. Said element will be supported in a structure. All the go/no-go gauges will be completely independent, so that the movement of one cannot affect the other, and vice versa.

The elements that provide the lineal movement will be pneumatic cylinders, electric axes or similar elements with devices to read the stroke. The precision thereof will be centesimal.

The go/no-go verification areas will be defined according to the exact geometry of the gauges, and, logically, for each one of said areas a movement interval will be established, each interval defining the validity of the verification or the non-validity thereof.

In order to limit the effort of the lineal movement element, there will precision regulators, pressure gauge with a 0-4 bar scale, so that the maximum effort of the cylinder is limited during its movement inside the thread, with the objective of avoiding damage of the ridges of the thread and not exerting a pressure so high that it could invalidate the verification.

In this way, joining both aspects, position and effort, we can know for each part if the internal diameter of the thread is within the fixed tolerance or not.

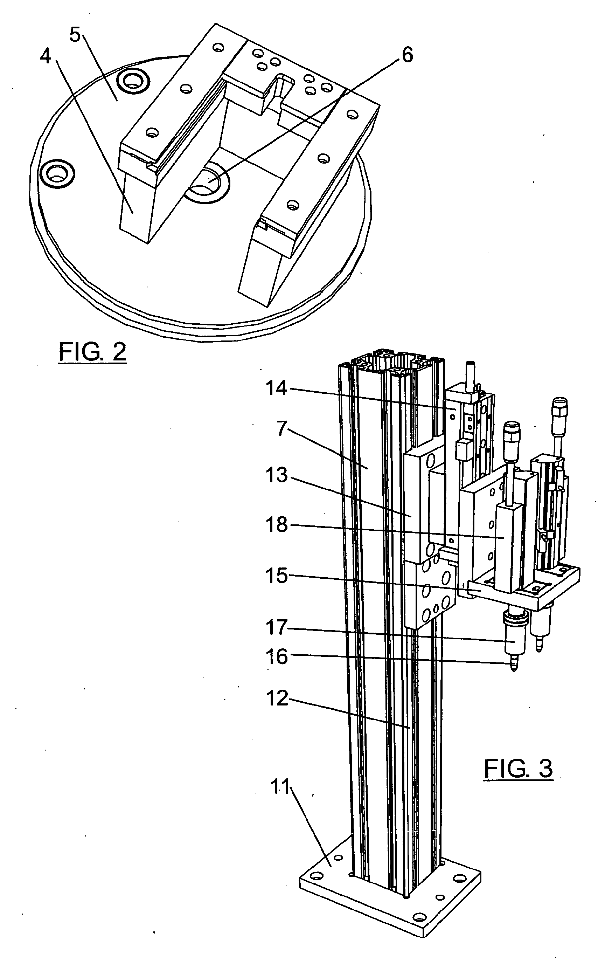

In figure 3 it can be seen how the aforementioned inside diameter gauging station (7) incorporates a base plate (11) through which said station is fixed to the bed (1), emerging from said plate a support foot (12) having on the side and on its upper part an anchoring plate (13) on which a vertical movement system (14) is mounted for a support plate (15) on which the gauge itself (16) is mounted, assisted by a radial compensator (17) and by a stroke reading system (18).

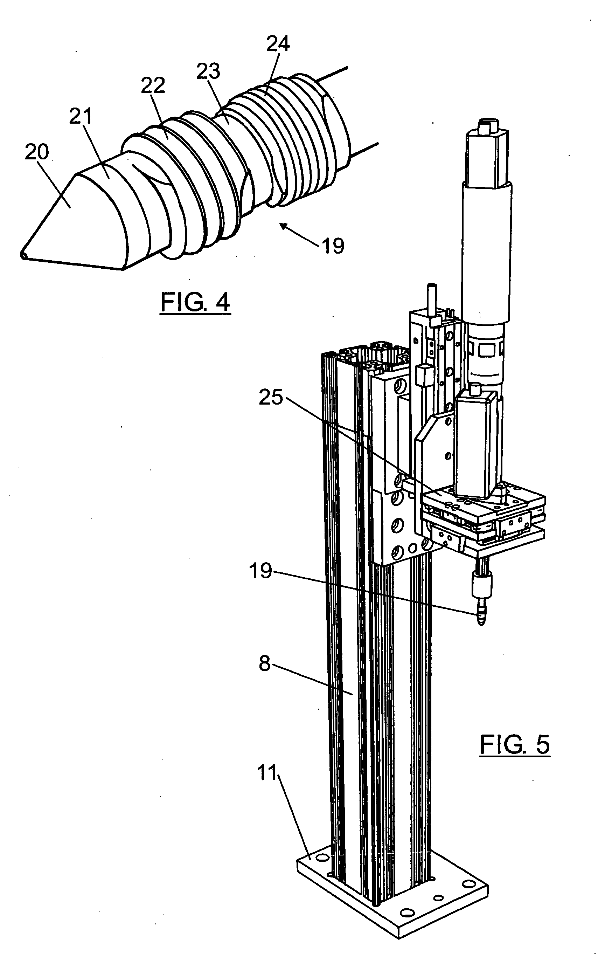

As regards the thread gauging station (8), the one shown in detail in figure 5 has a similar structure as the diameter gauging station (6), except that instead of the diameter gauge (16) it incorporates a thread gauge (19), represented at a much larger scale in figure 4.

This station uses a rotating activation system equipped with torque and angle transducers. Specifically, in the example of the practical embodiment chosen, electronic screwdrivers with torque and angle transducer incorporated have been integrated.

Each screwdriver will verify only one threaded position, so that if the verification was multiple, the screwdrivers can be located in independent and consecutive stations or in multiple and simultaneous stations.

The thread gauge (19), as it can be clearly seen in figure 4, has an attack and guidance area (20) with conic configuration, a cylindrical transition area (21), a go thread area (22), with the first screw thread recessed to facilitate the search of the thread of the part, another transition area (23) and a no-go thread area (24) also with the first screw thread recessed.

The thread gauging station (8) also has an alignment table (25) and radial compensation in alignment of the "X-Y" axis with the objective of placing, in a perfectly centered position, the axis of the screwdriver and the axis of the threaded hole, to prevent any deviation in the concentricity of the axes, which could produce a torque increase, produced by wobble.

The radial compensation system is based on the combined movements of both plates; the first one of them has a degree of freedom in the X axis, while the second one, integral to the first one, has a degree of freedom in the Y axis. In the second plate, the screwdriver is anchored, which therefore has both degrees of freedom.

After each verification, the system must go back by itself to the theoretical centre, so that the origin points coincide again. This return to the origin is attained by an internal system of very low load springs and perfectly compensated in both directions.

There can be a second thread gauge (9), such as in the example of a practical embodiment in figure 1, or there can be a thread gauge (8) with two thread gauges located one next to the other and activated by respective mechanisms.

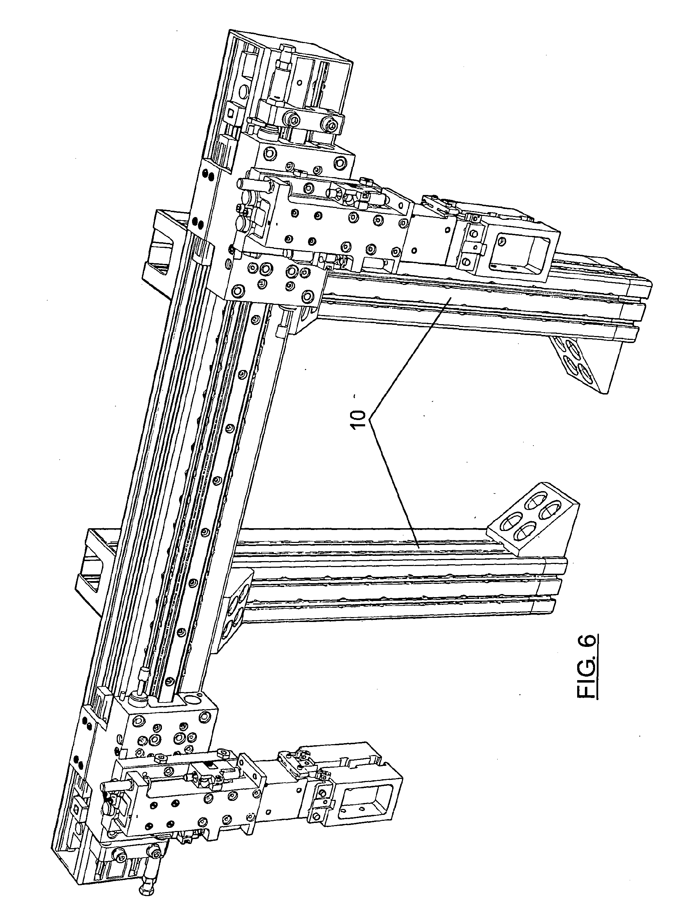

Finally, the gauge is complemented with the part manipulating device (10) shown in figures 1 and 6, for the automatic release of the parts, said manipulating device which will have to have the degrees of freedom necessary to manipulate the parts appropriately and safely, specifically of a horizontal movement module, a vertical movement module, a parallel jaw clamp and an intermediate stop.

The movement of the manipulating device will be from stop to stop in the horizontal stroke, as long as the part is valid; for invalid parts the manipulating device will move until the intermediate stop, at which point it will release the rejected part.

The valid parts will be released on a conveyor belt with the appropriate width and length, while the parts detected as invalid will be released into a special closed container to avoid unauthorized access.

According to the mass, geometry and speed needed, there will be a specific kind of manipulating device, which can be pneumatic, electric, with stepper motor or even if the application so requires, with servocontrol.

In order to guarantee that all parts detected as invalid by the gauging systems be removed from the productive process, a closed box will have to be built or installed, in which the manipulating device will have to deposit the part that the system rejects as invalid.

The box must be closed and its opening must be forbidden for unauthorized personnel, by means of a padlock or similar element. The box will have to be red and it will be identified with the caption "Rejected parts".

In order to detect that the parts rejected by the system are inserted in the box, there will be a ring-like or fiber optic magnetic sensor, so that the system must wait for the signal of said sensor before it starts the cycle again, that is to say, the motion is inhibited until the invalid part has been detected inside the box or in the closed access ramp.

## Claims

1. Automatic thread gauge, intended for the quality control of a thread of any measure established on different parts, **characterized by** being built from a bed (1), on which a plurality of fixed stations are established, specifically a diameter gauging station (7), a thread gauging station (8) and a part manipulating station (10), with respect to which a plurality of tools or jaws (4) can move intermittently, having the parts to be checked and anchoring means for said parts, being provided that the jaws are mounted on a mobile support, which moves intermittently and coinciding with the distancing between the stations, being said support and the diameter, thread gauging and part manipulating stations controlled by a microprocessor.

2. Automatic thread gauge according to claim 1, **characterized in that** the support for the jaws (4) is constituted by a division plate (2), conveniently motor-driven on a central axis (3) and on the periphery of which said jaws (4) are established in circumferential alignment and equiangular arrangement, establishing between each jaw (4) and the division plate (2) a rotating disc (5) which enables to duly orient said jaws with respect to the work stations (7-9-10).

3. Automatic thread gauge according to the preceding claims, **characterized in that** the diameter gauging station (7) incorporates a base plate (11) through which the bed is fixed, emerging from said plate a support foot (12) having on the side and on its upper part an anchoring plate (13) on which a vertical movement system (14) is mounted for a support plate (15) on which the gauge itself (16) is mounted, assisted by a radial compensator (17) and by a stroke reading system (18).

4. Automatic thread gauge according to claims 1 and 3, **characterized in that** it incorporates two diameter gauging stations (7-8), distanced from each other as the rest of the stations.

5. Automatic thread gauge according to the preceding claims, **characterized in that** the thread gauging station (8) has a similar structure to that of the diameter gauging station (6), incorporating instead of the diameter gauge (16) a thread gauge (19).

6. Automatic thread gauge according to claim 5, **characterized in that** the actual thread gauge (19) has an attack and guidance area (20) with conic configuration, a cylindrical transition area (21), a go thread area (22), another transition area (23) and a no-go thread area (24).

7. Automatic thread gauge according to claims 5 and 6, **characterized in that** the thread gauging station (8) also has an alignment table (25) and radial compensation in alignment of the "X-Y" axes to place in a perfectly centered position the axis of the screwdriver and the axis of the threaded hole, to prevent any deviation in the concentricity of the axes.

8. Automatic thread gauge according to the preceding claims, **characterized in that** the station (10) has a horizontal movement module, a vertical movement module, a parallel jaw clamp and an intermediate stop.
